(19) Europäisches Patentamt
European Patent Office
Office européen des brevets

(11) **EP 2 779 636 A2**

(12) **EUROPEAN PATENT APPLICATION**

(43) Date of publication:
**17.09.2014 Bulletin 2014/38**

(51) Int Cl.:
*H04N 7/14* (2006.01)      *H04N 21/4788* (2011.01)

(21) Application number: **14154356.1**

(22) Date of filing: **07.02.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.03.2013   US 201313841494**
**22.10.2013   KR 20130125743**

(71) Applicant: **Samsung Electronics Co., Ltd**
**Gyeonggi-do 443-742 (KR)**

(72) Inventors:
• **Gurbag, Can**
**Irvine, California 92612 (US)**
• **Zheng, Esther**
**Irvine, California 92612 (US)**
• **Meachum, Jason**
**Mission Viejo, California 92692 (US)**
• **Bringle, Michael**
**Irvine, California 92602 (US)**
• **Jin, Naiqi**
**Santa Ana, California H27 (US)**
• **Kashyap, Praveen**
**Irvine, California 92606 (US)**

(74) Representative: **Brandon, Paul Laurence**
**Appleyard Lees**
**15 Clare Road**
**Halifax, HX1 2HY (GB)**

(54)    **Display apparatus, server and control method thereof**

(57)    Apparatuses and methods related to a display apparatus, a server and a control method thereof, are provided. More particularly, the apparatuses and methods relate to a display apparatus, a server and a control method thereof which provides reaction information of users in real-time who are interested in a video while the video is being displayed.

A display apparatus (120) includes: a display unit (122) which displays a video thereon; a camera (131) which captures a user's reaction information with respect to a video; a communication portion (115) which communicates with an external server (60); and a controller (125) which controls the communication portion to transmit the user's reaction information to the external server and controls the communication portion to receive at least one another user's reaction information with respect to the video from the external server, and informs the another user's reaction based on the received another user's reaction information.

FIG. 11

EP 2 779 636 A2

**Description**

**BACKGROUND**

Field of the invention

Apparatuses and methods consistent with the exemplary embodiments relate to display apparatuses, servers and control methods thereof, and in particular to display apparatuses, servers and control methods thereof which provide reaction information of users in real-time who are interested in a video while the video is being displayed.

Description of the Related Art

A video chat system enables video chatting between multiple users. Video chats are typically conducted via an electronic apparatus such as a computer, a lap-top computer, a tablet PC or a smart phone, and may involve one-to-one interaction or one-to-many interaction. A video chat system enables a user participating in a video chat to transmit live or semi-live video of the user to other users involved in the video chat. However, such video has been generated or selected and transmitted by the user himself/herself and simply represents his/her own interest. As a result, it is difficult to check others' interest and degree of reaction to the video while the video chat is conducted.

**SUMMARY**

One or more exemplary embodiments provide a display apparatus, a server and a control method thereof which provide reaction information of people in real-time who are interested in a video while the video is displayed.

According to an aspect of an exemplary embodiment, there is provided a control method of a display apparatus comprising: displaying a video; acquiring a user's reaction information with respect to the video; transmitting the user's reaction information to an external server; receiving from the external server at least one another user's reaction information with respect to the video; and informing the another user's reaction based on the received another user's reaction information.

The acquiring the user's reaction information may comprise acquiring information of at least one of the user's motion and voice.

The informing the another user's reaction may comprise showing the another user's appearance based on the received another user's reaction information.

The displaying the video may comprise displaying a chat window engaging the at least one another user.

The displaying the chat window engaging the another user may comprise selectively displaying the chat window according to the user's input.

According to an aspect of an exemplary embodiment, there is provided a control method of a server comprising: receiving a first user's reaction information with respect to a video displayed, from a first display apparatus; determining the first user's degree of interest in the video based on the received first user's reaction information; and transmitting the first user's reaction information to a second display apparatus of a second user that displays the video if the determined first user's degree of interest is a predetermined degree or higher.

The receiving the first user's reaction information may comprise receiving information of at least one of the first user's motion and voice.

The determining the first user's degree of interest may comprise using correlation between the first user's motion and voice.

According to an aspect of an exemplary embodiment, there is provided a control method of a display apparatus comprising: displaying a first video; acquiring a first user's first reaction information of the display apparatus with respect to the first video or a second user's second reaction information of at least one another display apparatus that displays the first video; determining the first user's or second user's degree of interest in the first video based on the first or second reaction information; and performing an operation based on the determined degree of interest.

The acquiring the first user's first reaction information or the second user's second reaction information may comprise acquiring information of at least one of the first user's or second user's motion and voice.

The determining the degree of interest may comprise determining the degree of interest by using a correlation between the first user's or second user's motion and voice.

The performing the operation based on the determined degree of interest may comprise transmitting the first user's first reaction information or the second user's second reaction information to an external server.

According to an aspect of an exemplary embodiment, there is provided a display apparatus comprising: a display unit which displays a video thereon; a camera which captures a user's reaction information with respect to a video; a communication portion which communicates with an external server; and a controller which controls the communication portion to transmit the user's reaction information to the external server and controls the communication portion to receive at least one another user's reaction information with respect to the video from the external server, and informs the another user's reaction based on the received another user's reaction information.

The user's reaction information may comprise information of at least one of the user's motion and voice.

The informing the another user's reaction may comprise showing the another user's appearance based on the received another user's reaction information.

The display unit may display a chat window engaging at least one another user that displays the video.

The display unit may selectively display the chat window thereon according to the user's input.

According to an aspect of an exemplary embodiment, there is provided a server comprising: a communication portion which communicates with at least one display apparatus; and a controller which controls the communication portion to receive a first user's reaction information with respect to a video displayed, from the first display apparatus, and determines a first user's degree of interest in the video based on the received first user's reaction information, and if the determined first user's degree of interest is a predetermined degree or higher, controls the communication portion to transmit the first user's reaction information to a second display apparatus of a second user that displays the video.

The first user's reaction information may comprise information of at least one of the user's motion and voice.

The determining the first user's degree of interest may be performed by using a correlation between the first user's motion and voice.

According to an aspect of an exemplary embodiment, there is provided a display apparatus comprising: a display unit which displays a first video thereon; an information acquisition portion which acquires a first user's first reaction information of the display apparatus with respect to the first video or a second user's second reaction information of at least one another display apparatus that displays the first video; and a controller which determines the first user's or second user's degree of interest in the first video based on the first or second reaction information and performs an operation based on the determined degree of interest.

The first user's first reaction information or the second user's second reaction information may comprise information of at least one of the first user's or second user's motion and voice.

The determining the degree of interest may comprise using correlation between the first user's or second user's motion and voice.

The operation may comprise transmission of the first user's first reaction information or the second user's second reaction information to an external server.

BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 illustrates a system for capturing and analyzing user activity, in accordance with an embodiment.

FIG. 2A is a block diagram of a client device, in accordance with an embodiment.

FIG. 2B illustrates a user interface displayed on a client device participating in a group video chat, in accordance with an embodiment.

FIG. 3 illustrates a block diagram of a user interest measurement application module, in accordance with an embodiment.

FIG. 4 illustrates motion detection processing of a video frame, in accordance with an embodiment.

FIG. 5 illustrates graphs corresponding to the metric measurements calculated with respect to the video frame, in accordance with an embodiment.

FIG. 6 illustrates audio spectrums, in accordance with an embodiment.

FIG. 7 illustrates the capture of a user reaction by using a user's interest metrics, in accordance with an embodiment.

FIG. 8 illustrates a block diagram of a server unit, in accordance with an embodiment.

FIG. 9 illustrates a flow chart for generating video streams combined by a selection of video streams, in accordance with an embodiment.

FIG. 10 is a high-level block diagram of an electronic apparatus comprising a computing system implementing an embodiment.

FIG. 11 is a block diagram of a display apparatus which provides a video chat function, in accordance with an embodiment.

FIG. 12 is a block diagram of a server, in accordance with an embodiment.

FIG. 13 is a block diagram of a display apparatus, in accordance with an embodiment.

FIG. 14 is a flowchart of the display apparatus providing the video chat function, in accordance with an embodiment.

FIG. 15 is a flowchart of the server, in accordance with an embodiment.

FIG. 16 is a flowchart of the display apparatus, in accordance with an embodiment.

**DETAILED DESCRIPTION OF EXEMPLARY EMBODIMENTS**

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

One or more embodiments relate generally to multi-user video chatting, and in particular to capturing and analyzing user activity during a multi-user video chat session. One embodiment provides a system for facilitating a multi-user video chat session, wherein the system comprises multiple electronic client devices and a server. The server receives, from each client device, an information unit representing user activity at the client device. Each information unit received from each client device comprises a video stream capturing user activity at the client device. The server selects one or more information units based on measurements of user activity in the information units received. The server generates a combined video stream including the selected one or more information units, wherein the combined video stream is sent to at least one client device.

One embodiment provides a method for facilitating a multi-user video chat session. The method comprises receiving information units from multiple client devices, wherein each information unit represents user activity at a client device. Each information unit received from each client device comprises a video stream capturing user activity at the client device. One or more information units are selected based on measurements of user activity in the information units received. A combined video stream including the selected one or more information units is generated, wherein the combined video stream is sent to at least one client device.

One embodiment provides a non-transitory computer-readable medium having instructions which when executed on a computer perform a method for facilitating a multi-user video chat session. The method comprises receiving information units from multiple client devices, wherein each information unit represents user activity at a client device. Each information unit received from each client device comprises a video stream capturing user activity at the client device. One or more information units are selected based on measurements of user activity in the information units received. A combined video stream including the selected one or more information units is generated, wherein the combined video stream is sent to at least one client device.

In one embodiment, each client device receives the same combined video stream from the server. In another embodiment, the server is further configured to receive, from each client device, user preferences for the client device, wherein the server generates a combined video stream for the client device based on the user preferences for the client device.

In one embodiment, the server is further configured to for each video stream received, measure user activity captured in the video stream. In another embodiment, the server is further configured to receive, from each client device, a measurement of user activity captured at the client device.

In one embodiment, the selected one or more information units includes a video stream with the highest measurement of user activity.

One embodiment provides an electronic device for facilitating a multi-user video chat session. The electronic device comprises a display configured to display a piece of content, a camera configured to capture a video stream of user activity during playback of the piece of content, and a graphical user interface (GUI) application module. The GUI module is configured to receive a combined video stream including at least one video stream of user activity at a different electronic device, and generate a GUI comprising at least one video chat window. Each video chat window includes a video stream of user activity at a different electronic device. The display is further configured to simultaneously display the piece of content and the GUI generated.

The electronic device receives the combined video stream from a server. The electronic device sends the video stream of user activity captured by the camera to the server.

The electronic device further comprises a user interest measurement application module for measuring user interest of the piece of content based on a measurement of user activity, wherein the electronic device sends data relating to the measured user interest to the server.

The electronic device further comprises a reaction capture application module for detecting and recording a user reaction during playback of the piece of content. The recorded user reaction is sent to at least one of: the server, and a social networking site.

In one embodiment, the electronic device sends user preferences to the server, and the combined video stream received from the server is based on the user preferences.

One embodiment provides a graphical user interface (GUI) displayed on a display of an electronic client device. The GUI comprises a first window for displaying a piece of content, and a video chat interface for facilitating a multi-user video chat session during playback of the piece of content.

The video chat interface includes at least one video chat window. Each video chat window includes a video stream of user activity captured at a different client device.

In one embodiment, the number of video chat windows displayed is based on user preferences. In one embodiment, the number of video chat windows displayed is based on capabilities of the client device.

These and other aspects and advantages of one or more embodiments will become apparent from the following detailed description, which, when taken in conjunction with the drawings, illustrate by way of example the principles of one or more embodiments.

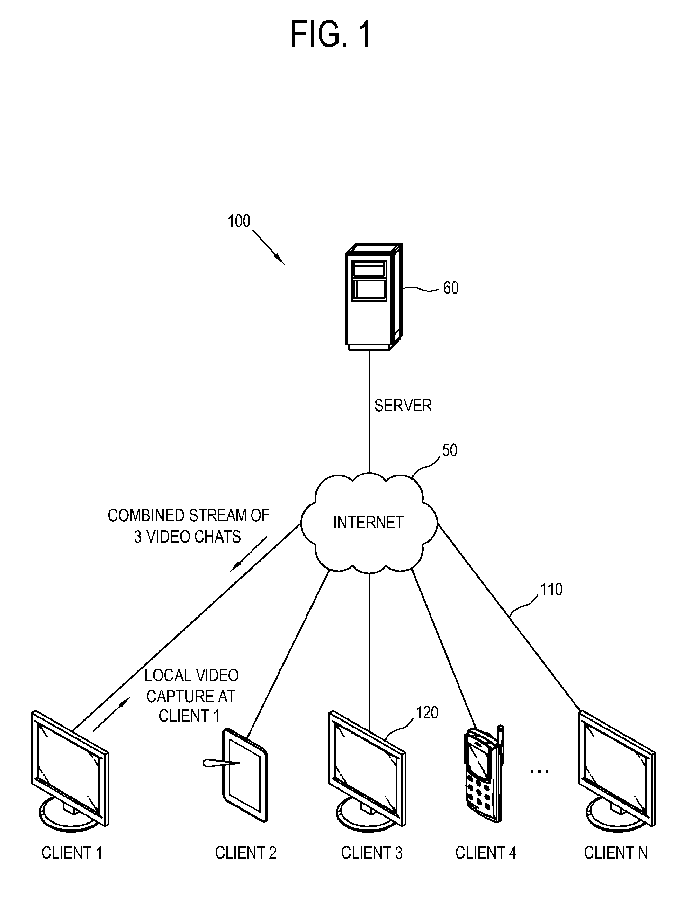

FIG. 1 illustrates a system 100 for capturing and analyzing user activity, in accordance with an embodiment.

In one embodiment, the system 100 comprises at least one client device 120. As shown in FIG. 1, the system 100 comprises multiple client devices 120, such as Client 1, Client 2, Client 3, Client 4, ..., and Client N, wherein N is an integer greater than 1. A client device 120 may be an electronic device such as an appliance, a personal computer (PC), a television (TV) such as a smart TV, or a mobile device (e.g., a mobile phone such as a smart phone, a laptop computer).

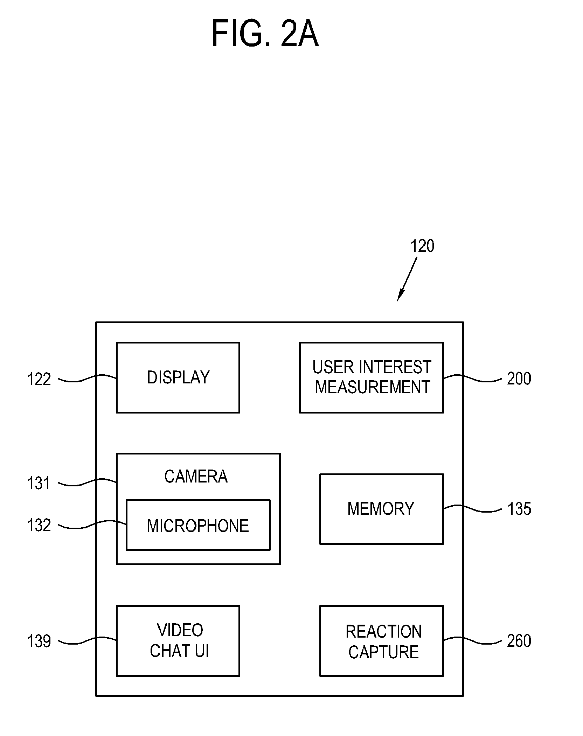

In one embodiment, each client device 120 can play back different types of content, including audio and video such as television programs, movies, and advertisements. Each client device 120 includes a display 122 (FIG. 2A) for displaying content. A client device 120 may receive content for playback from one or more content distributors, such as a content provider (e.g., a television cable company), a content creator (e.g., a video podcaster), or an advertiser.

Each client device 120 further includes a camera component 131 (FIG. 2A) for capturing/recording videos and/or images. In one embodiment, the camera module 131 is integrated with the client device 120. In another embodiment, the camera module 131 is a separate client device 120. As described in detail later herein, the system 100 uses the camera module 131 to capture user activity data, such as the facial expressions (e.g., laughter, crying) and the body movements (e.g., jumping) of one or more users viewing content playing on the client device 120.

In one embodiment, the system 100 further comprises a microphone module 132 (FIG. 2A) for capturing (e.g., recording) audio (i.e., sound) from the area surrounding the client device 120. In one embodiment, the microphone module 132 is integrated with the client device 120. In another embodiment, the microphone module 132 is a separate client device 120.

As described in detail later herein, the system 100 uses the microphone module 132 to capture user activity data, such as the words spoken by one or more users viewing content playing on the client device 120. The audio captured by the microphone module 132 may also be used to determine context data, such as the noise levels of the ambient environment (e.g., how noisy is the room where the client device 120 is situated).

Each client device 120 may establish a connection 110 to an external network, such as the Internet 50. A connection 110 may be a wireless connection, a wired connection, or a combination of the two.

The system 100 further comprises a server unit 60 that is connected to the Internet 50 over a connection 110.

A user operating a client device 120 may participate in a group video chat (i.e., video conference) while watching content playing on the client device 120. The server unit 60 is configured to facilitate a group video chat between multiple client devices 120. Each client device 120 participating in a group video chat sends a captured video stream and/or images to the server unit 60 via the Internet 50, and simultaneously receives a video stream from the server unit 60 via the Internet 50.

The server unit 60 receives an individual video stream from each client device 120 participating in a group video chat. For each participating client device 120, the server unit 60 selects a subset of video streams from the video streams received, generates a combined video stream that includes the selected subset of video streams, and sends the combined video stream to the participating client device 120. In one embodiment, each participating client device 120 receives the same combined video stream. In another embodiment, each participating client device 120 receives a different combined video stream.

FIG. 2A is a block diagram of a client device 120, in accordance with an embodiment. The client device 120 further comprises a user interest measurement application module 200 for measuring user interest of content playing on the client device 120, a memory unit 135 for storing data (e.g., locally captured video), a reaction capture application module 260 for recording and saving portions of the captured video stream indicating high user interest, and a video chat user interface application module 139 for generating a video chat user interface 125 for display on the display 122.

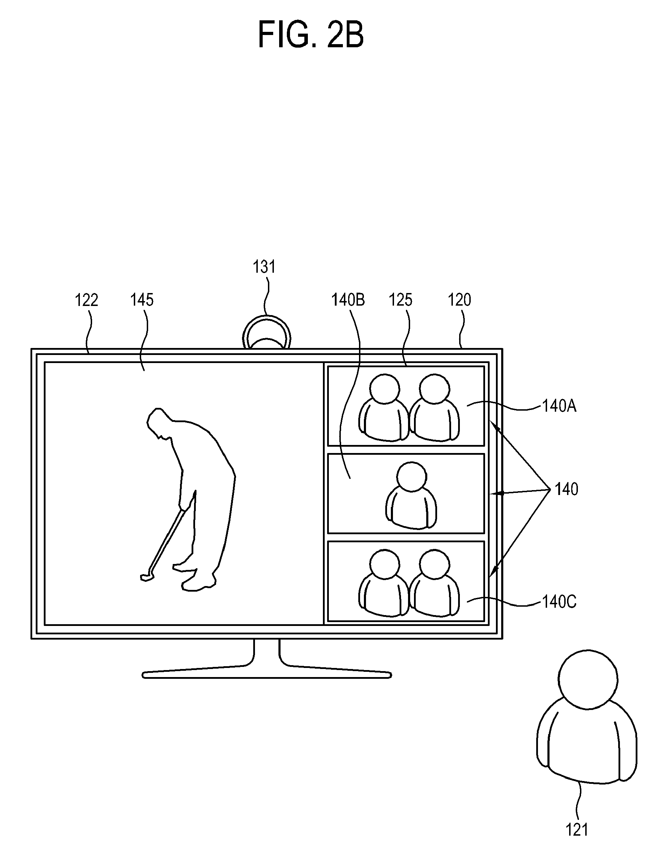

FIG. 2B illustrates a user interface displayed on a client device participating in a group video chat, in accordance with an embodiment. The camera component 131 is configured to capture videos and/or images of one or more users 121 positioned in front of the camera component 131.

In one embodiment, the camera component 131 captures a video stream (i.e., one continuous video) of one or more users during playback of content on the client device 120. For example, as shown in FIG. 2B, the camera component 131 captures video and/or images of a user 121 watching a piece of content (e.g., a golf game) on the client device 120. As described in detail later herein, the system 100 analyzes the locally-captured video stream to determine the user's reaction to content playing on the client device 120.

A user 121 may participate in a group video chat while simultaneously watching content on the client device 120. As shown in FIG. 2B, the client device 120 is configured to simultaneously display content (e.g., the golf game) and a video chat user interface 125. The placement of the video chat user interface 125 relative to the content playing on the client device 120 may vary. In one example, the video chat user interface 125 is positioned in the foreground of the display 122 while the content plays in the background. In another example, the video chat user interface 125 is positioned in the background of the display 122 while the content plays in the foreground. In yet another example, the display 122 displays the content in a first window 145 and the video chat user interface 125 next to the first window 145, as shown in FIG. 2B.

The video chat user interface 125 displays a combined video stream received from the server unit 60. As stated above, a combined video stream includes a selected subset of video streams. In one embodiment, the server unit 60 selects which participating client devices 120 to include in the combined video stream. In another embodiment, the client device 120 selects which participating client devices 120 that the server unit 160 should include in the combined video stream.

The video chat user interface 125 includes one or more video chat windows 140. Each video chat window 140 displays a video stream captured by a different client device 120 participating in the group video chat. For example, as shown in FIG. 2B, the video chat user interface 125 displays a first video chat window 140A, a second video chat window 140B, and a third video chat window 140C. The number of video chat windows 140 displayed may be based on one of the following: the user's group chat settings and the capabilities of the client device 120. The number of client devices 120 participating in the group video chat may be more than the number of video chat windows 140 displayed on the display 122.

In one embodiment, the server unit 60 selects which participating client devices 120 to include in the combined video stream based on measurements of user activity at each client device 120. A measurement of user activity represents a degree of user interest in the content playing on a client device 120. User interest may be calculated locally at the client device 120 or remotely at the server unit 60.

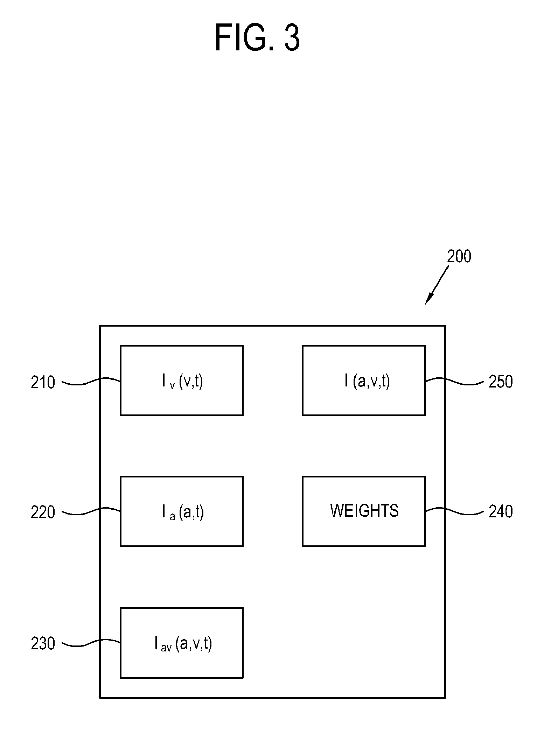

FIG. 3 illustrates a block diagram of a user interest measurement application module 200, in accordance with an embodiment. Measuring user interest at a client device 120 depends on multiple variables, such as the video motion of the locally captured video stream, the audio volume of the locally captured video stream, and the correlation between the audio and video ("A/V correlation") of the locally captured video stream. In one embodiment, the user interest of a client device 120 is calculated using relation (1) below:

$$I(v,a,t) = c_v * I_v(v,t) + c_a * I_a(a,t) + c_{av} * I_{av}(a,v,t)(1),$$

wherein $I(v,a,t)$ is the user interest of a client device 120, $I_v(v,t)$ is the measured user interest based on video motion of the locally captured video stream, $I_a(a,t)$ is the measured user interest based on the audio of the locally captured video stream, $I_{av}(a,v,t)$ is the measured user interest based on the AV correlation of the locally captured video stream, $c_v$ is the weight constant for $I_v(v,t)$, $c_a$ is the weight constant for $I_a(a,t)$, and $c_{av}$ is the weight constant for $I_{av}(a,v,t)$.

The system 100 further comprises a user interest measurement application module 200. In one embodiment, the user interest measurement application module 200 resides on the server unit 60. In another embodiment, the user interest measurement application module 200 resides on a client device 120. The user interest measurement application module 200 comprises a video unit 210 for determining $I_v(v,t)$, an audio unit 220 for determining $I_a(a,t)$, an AV correlation unit 230 for determining $I_{av}(a,v,t)$, and a storage device 240 for maintaining weight constants $c_v$, $c_a$ and $c_{av}$, a user interest unit 250 for determining $I(a,v,t)$.

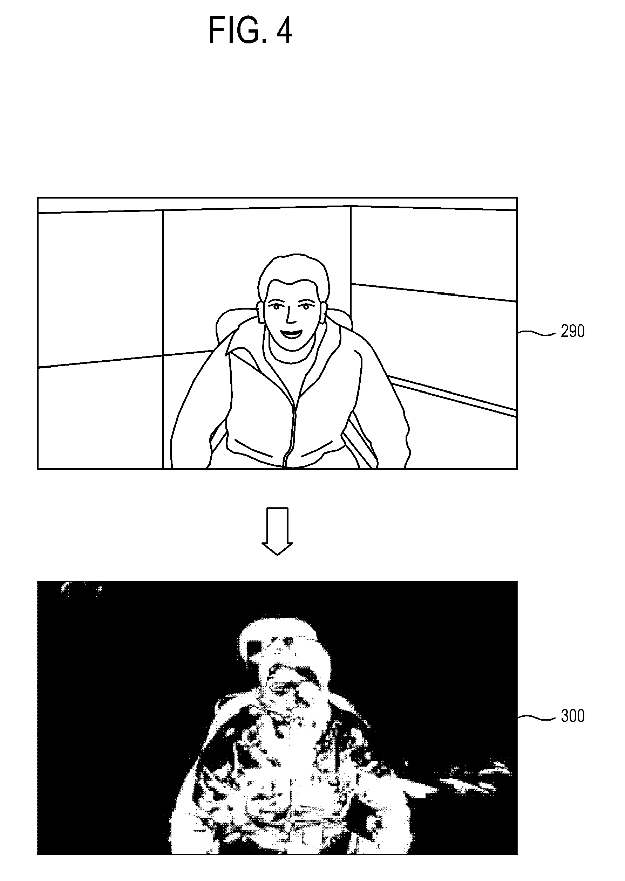

FIG. 4 illustrates motion detection processing of a video frame 290, in accordance with an embodiment. The video unit 210 first processes each video frame 290 of a captured video stream using a motion detection algorithm, and generates a corresponding motion frame 300 for each video frame 290 processed. Each motion frame 300 highlights motion captured in a corresponding video frame 290.

In one embodiment, the motion detection algorithm models the background of the captured video stream and subtracts the background modeled from each video frame to detect "motion" in the video frame. Each video frame 290 is converted to grayscale, and the background model $m_0$ is initialized to a first video frame $f_0$ of the captured video stream. At each subsequent video frame $f_i$ of the captured video stream, the value of each background pixel $b_{xy}$ is moved towards a corresponding value $f_{i,xy}$ of the frame $f_i$ by 1 in accordance with relation (2) below:

$$b_{xy} = \begin{cases} b_{xy} + 1, & b_{xy} < f_{i,xy} \\ b_{xy} - 1, & b_{xy} > f_{i,xy} \\ b_{xy}, & b_{xy} = f_{i,xy} \end{cases} \quad (2).$$

For each pixel $f_{i,xy}$ in the current frame $f_i$, the absolute difference between the value of a corresponding background pixel $b_{xy}$ and the value of the pixel $f_{i,xy}$ is calculated using relation (3) below:

$$d_{xy} = \left| b_{xy} - f_{i,xy} \right| \qquad (3).$$

Let $m_{i,xy}$ represent the value of a pixel at coordinate (x,y) of an $i^{th}$ motion frame 300. The value of each pixel $m_{i,xy}$ is set in accordance with relation (4) below:

$$m_{i,xy} = \begin{cases} 1, & d_{xy} \geq T \\ 0, & d_{xy} < T \end{cases} \qquad (4),$$

wherein T represents a preset threshold value. If $d_{xy}$ is greater than or equal to the preset threshold value T, $m_{i,xy}$ is marked as a motion pixel (i.e., a moving pixel). If $d_{xy}$ is less than or equal to the preset threshold value T, $m_{i,xy}$ is marked as a non-motion pixel. The preset threshold value T may be used to eliminate noisy pixels.

As shown in FIG. 4, pixels of the motion frame 300 marked as motion pixels are represented in white, and pixels of the motion frame 300 marked as non-motion pixels are represented in black.

The video unit 210 then calculates metrics for each motion frame 300 generated. In one embodiment, the video unit 210 is configured to calculate the following metrics for an $i^{th}$ motion frame 300: a normalized average x position $x_{avg,i}$, a normalized average y position $y_{avg,i}$, and a normalized motion level $m_i$. The normalized average x position $x_{avg,i}$ is calculated using relation (5) below:

$$x_{avg,i} = \sum_{x=0,y=0}^{x=w-1,y=h-1} \frac{x \times m_{i,xy}}{w} \left/ \sum_{x=0,y=0}^{x=w-1,y=h-1} m_{i,xy} \right. \qquad (5),$$

wherein w represents the resolution width of the captured video stream, and wherein h represents the resolution height of the captured video stream.

The normalized average y position $y_{avg,i}$ is calculated using relation (60) below:

$$y_{avg,i} = \sum_{x=0,y=0}^{x=w-1,y=h-1} \frac{y \times m_{i,xy}}{h} \left/ \sum_{x=0,y=0}^{x=w-1,y=h-1} m_{i,xy} \right. \qquad (60).$$

The normalized motion level $m_i$ is calculated using relation (7) below:

$$m_i = \sum_{x=0,y=0}^{x=w-1,y=h-1} m_{i,xy} \left/ w \times h \right. \qquad (7).$$

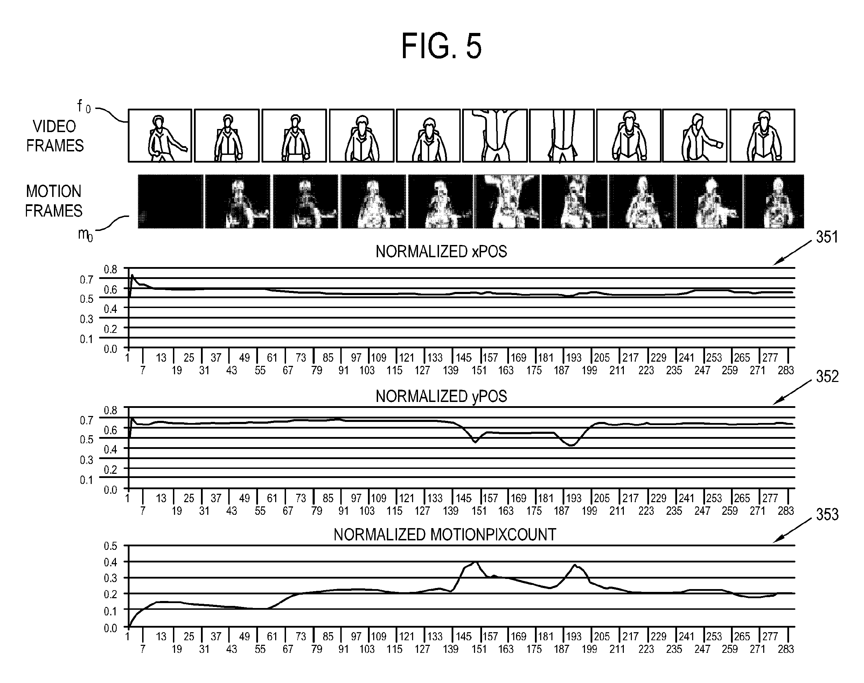

FIG. 5 illustrates graphs corresponding to the metric measurements calculated with respect to the video frame, in accordance with an embodiment. The video unit 210 generates a graph over time (i.e., over video frame numbers) for each metric calculated. For example, as shown in FIG. 5, the video unit 210 generates a first graph 351 for the normalized average x position $x_{avg,i}$, a second graph 352 for the normalized average y position $y_{avg,i}$, and a third graph 353 for the normalized motion level $m_i$. FIG. 5 further illustrates every 30th video frame 290 and the corresponding motion frame 300 for the captured video stream.

The video unit 210 is further configured to extract distinct graph patterns for distinct user actions from the graphs. For example, a graph pattern representing a user jumping up and down in front of the client device 120 may be different than a graph pattern representing a user who gets up and walks away from the client device 120.

Over time, the graph patterns extracted may be used to train a pattern recognition algorithm that is used to classify portions of the captured video stream into different classes of user action. For example, a portion of a captured video stream showing a user jumping up and down in front of the client device 120 may be classified differently from a portion of the captured video stream showing a user who gets up and walks away from the client device 120.

Interest weights may be assigned to different classes of user action. For example, the interest weight assigned to the user action of jumping up and down may be higher than the interest weight assigned to the user action of getting up and walking away. In one embodiment, $I_v(v,t)$ represents the sum of weighted user actions detected in the captured video stream.

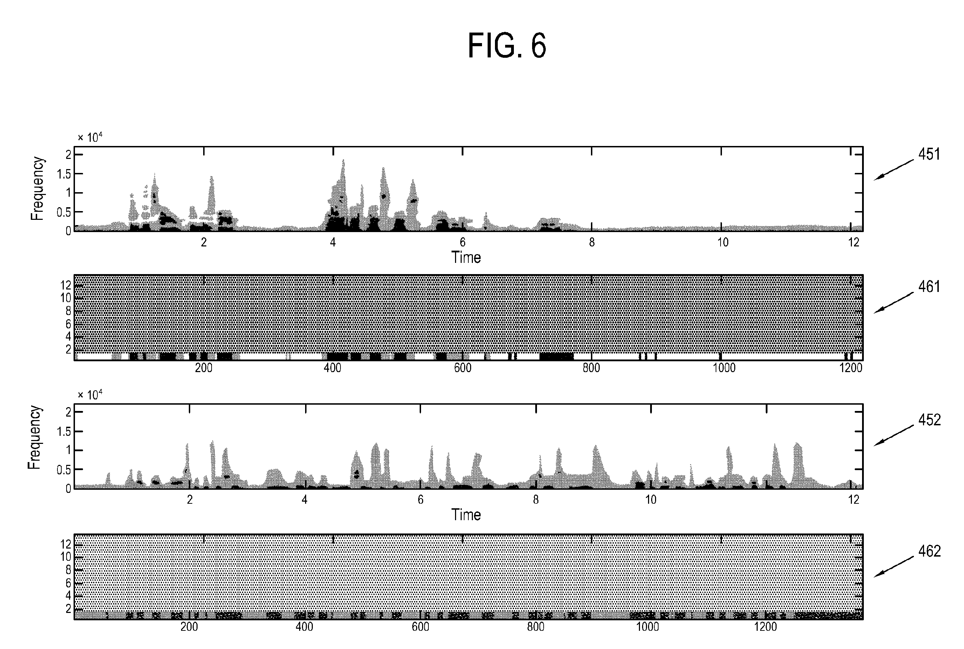

FIG. 6 illustrates audio spectrums, in accordance with an embodiment. In one embodiment, the audio unit 220 is configured to detect changes in volume or signal strengths over time in the audio of the captured video stream.

For example, FIG. 6 shows a first frequency spectrum 451 for a first piece of audio that includes occasional cheering and commenting from users, and a second frequency spectrum 452 for a second piece of audio including mostly background talking. The frequency of audio significantly changes when an event indicating user interest, such as cheering or loud user comments, occurs. The differences between adjacent time slots of the frequency spectrum (e.g., 0.5 seconds) may be used as $I_a(a,t)$.

In another embodiment, the audio unit 220 is configured to detect Mel-frequency cepstral coefficients (MFCCs) for the audio of the captured video stream. FIG. 6 further shows a first representation 461 of MFCC values corresponding to the first frequency spectrum 451, and a second representation 462 of MFCC values corresponding to the second frequency spectrum 452. MFCC values are higher when an event indicating user interest, such as cheering or loud user comments, occurs. Higher MFCC values are colored as darker gray and lower MFCC values are colored as lighter gray or white. In a first representation 461 of MFCC values, MFCC values when an event indicating user interest occurs are distinguished well by difference of colors. But, in a second representation 462 of MFCC values, MFCC values of background talking are not distinguished well by color. Normalized MFCC values may be used as $I_a(a,t)$.

The A/V correlation unit 230 is configured to receive $I_v(v,t)$ and $I_a(a,t)$ from the video unit 210 and the audio unit 220, respectively. In one embodiment, the AN correlation unit 230 calculates $I_{av}(a,v,t)$ using relation (8) below:

$$I_{av}(a,v,t) = \begin{cases} 1, & if\ I_v(v,t) > \alpha\ and\ I_a(a,t) > \beta \\ 0, & otherwise \end{cases} \quad (8),$$

where $\alpha$ and $\beta$ are thresholds for $I_v(v,t)$ and $I_a(a,t)$, respectively.

In another embodiment, the A/V correlation unit 230 may be calculated on the basis of a phase difference between audio and video. In this specification, let $T_p$ and $T_f$ represent a look behind and a look ahead period, respectively. Let $I_{v,max}(v,t)$ represent the maximum value of $I_v(v,t)$ over the range $[t - T_p, t + T_f]$ and let $I_{a,max}(a,t)$ represented the maximum value of $I_a(a,t)$ over the $[t - T_p, t + T_f]$ range. The A/V correlation unit 230 calculates $I_{av}(a,v,t)$ using relation (9) below:

$$I_{av}(a,v,t) = \begin{cases} 1, & if\ I_v(v,t) > \alpha\ and\ I_{a,max}(a,t) > \beta \\ 1, & if\ I_{v,max}(v,t) > \alpha\ and\ I_a(a,t) > \beta \\ 0, & otherwise \end{cases} \quad (9).$$

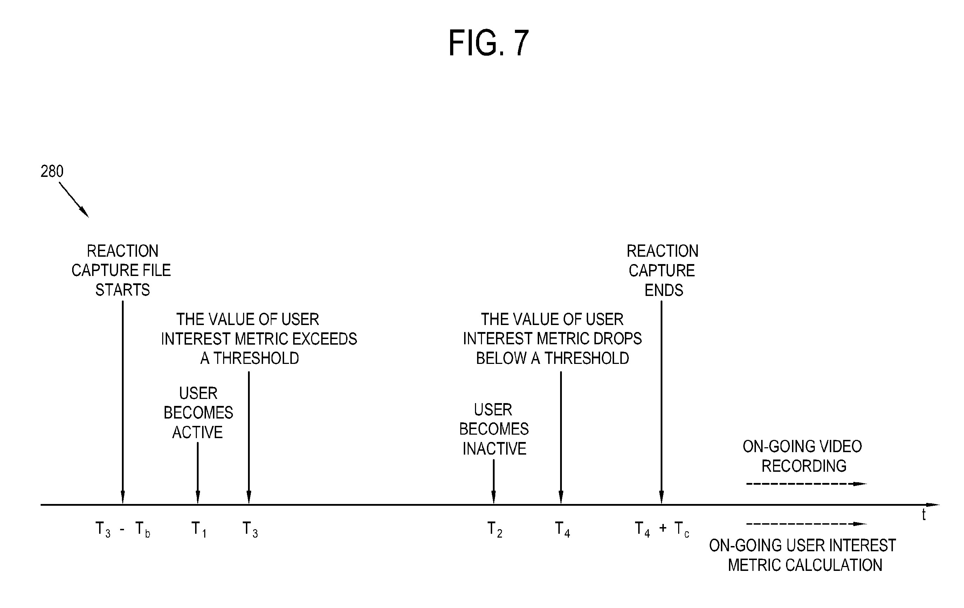

FIG. 7 illustrates the capture of a user reaction by using a user's interest metrics, in accordance with an embodiment. The reaction capture application module 260 is configured to record an ongoing user reaction using in-memory buffering.

Specifically, to classify portions of the captured video stream into different classes of user action, the video unit 210 references a previous set of video frames 290. As such, the earliest the user interest measurement application module 200 can determine $I(v,a,t)$ is at time $t+T_p$, wherein $T_p$ represents the duration of a detected user action.

To eliminate or minimize video delay, the reaction capture application module 260 maintains a video buffer in the memory unit 135, wherein the duration of video maintained in the video buffer $T_b$ is greater than $T_p$. The video buffer maintained potentially includes a portion of the captured video stream that shows a user reaction. After the start and end time of a user reaction is determined, the reaction capture application module 260 cleans up the video buffer, and continues to save another portion of the ongoing video stream.

For example, as shown in FIG. 7, a user is active between time $T_1$ and time $T_2$ of the timeline 280. User interest $I(v,a,t)$ of a piece of content playing on the client device 120 varies over time. At time $T_3 = T_1 + T_p$, the user interest $I(v,a,T_1)$ is calculated and a user reaction is detected. The reaction capture application module 260 maintains video from time $T_3 - T_b$ onwards, and begins recording the rest of the captured video stream. At time $T_2$ the user is no longer active. At time $T_4 = T_2 + T_p$, the user interest $I(v,a,T_2)$ is calculated at. Duration $T_c$ represents the ending portion of a user reaction. The reaction capture application module 260 records the video from time $T_3 - T_b$ to time $T_4 + T_c$, thereby ensuring that the entire user reaction is captured. The video of the user reaction may be sent to the server unit 60 or posted to a social networking site.

In one embodiment, user reactions captured by the reaction capture application module 260 may be pre-recorded and used as an extra indicator to detect a user reaction. By maintaining videos of different user reactions (cheering, laughing, bouncing, hand clapping, etc.), the system 100 can calculate the user interest value for the videos and use the videos as templates.

In one embodiment, the system 100 may utilize inputs from external resources. For example, when a soccer game is playing on a client device 120, the start time of user reaction is usually close to a scoring event in the soccer game. The system 100 can obtain information relating to scores of the soccer game, and determine increased user interest when the score changes. Other resources may be used, such as resources relating to crowd sourcing (e.g., comments posted to Twitter® during the soccer game), and commentary from sports broadcasters, etc.

When there are multiple clients in the system 100, the server unit 60 can collect the values of user interest from different client devices 120 over time. If a large percentage of client devices 120 start to provide high user interest values, the system 100 may determine that an event of interest is occurring and send a recording command to all the client devices 120.

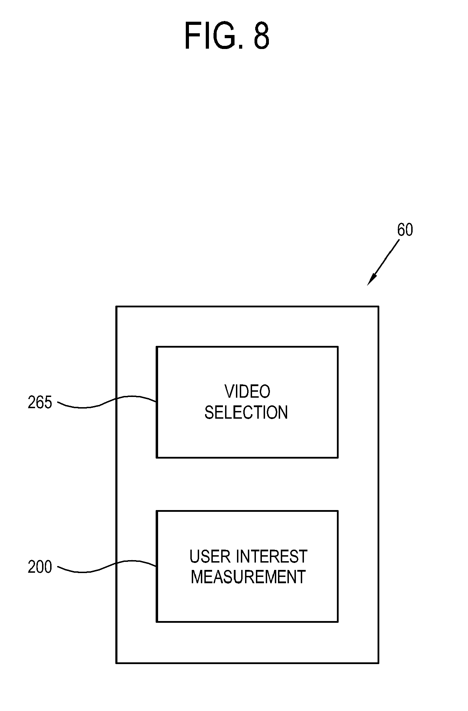

FIG. 8 illustrates a block diagram of a server unit 60, in accordance with an embodiment. In one embodiment, the server unit 60 comprises a video selection application module 265. The video selection application module 265 receives a video stream from each client device 120 participating in a group video chat. The video selection application module 265 selects a subset of participants based on the measurements of user interest determined by the user interest measurement application module 200, and composes a combined video stream including the video streams of the selected subset of participants.

In one embodiment, the video selection application module 265 also receives from each participating client device 120 a metric representing user interest $I(a,v,t)$. In another embodiment, the server unit 60 further comprises a user interest measurement application module 200 for calculating user interest $I(a,v,t)$ for each participating client device 120. The video selection application module 265 may select the most active participants based on the user interest metrics received.

In one embodiment, the combined video stream is sent to all participating client devices 120. In another embodiment, the video selection application module 265 sends a different combined video stream to a participating client device 120 on the preferences of the client participating device 120. For example, the video selection application module 265 may also receive from each participating client device 120 a list of preferred users that the participating client device 120 wants to video chat with. The video selection application module 265 may select which participants to include in the combined video stream based on the user interest metrics and the list of preferred users received.

In one embodiment, to conserve networking resources, each participating client device 120 first sends the calculated user interest metric to the server unit 60. The server unit 60 then requests a video stream from a participating client device 120 only if the participating client device 120 is selected.

A client device 120 can set user preferences indicating which participating clients should be included in the video chat windows available, thereby leaving the remaining chat windows, if any, to other participating clients not included in the preferred users but with the highest user interest values.

In one embodiment, the system 100 allows for each participating client device 120 to vote for which participant to include in the combined video stream.

In one embodiment, the server unit 60 re-selects participants after a particular duration of time has elapsed (e.g., 10 seconds).

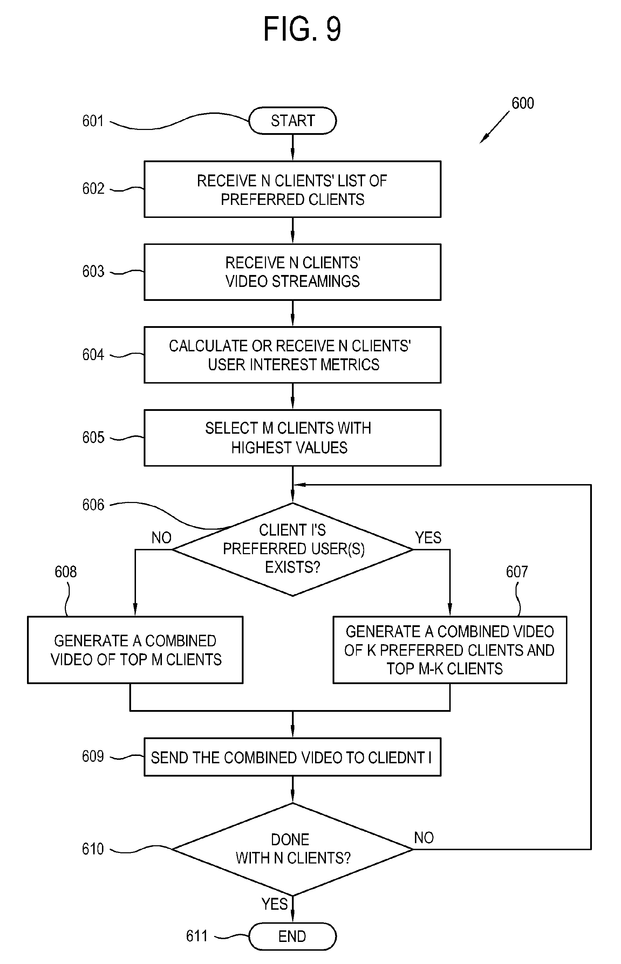

FIG. 9 illustrates a flow chart for generating video streams combined by a selection of video streams, in accordance with an embodiment. In process block 601, the process starts. In process block 602, a list of preferred clients is received from each of the N participating clients. In process block 603, a video stream of the client is received from each participating client. In process block 604, a metric representing the client's user interest in the content playing on the client's client device is calculated or received from each participating client. In process block 605, M clients with the highest values for user interest is selected. In process block 606, for a participating client, whether any of the client's preferred clients is a participating client is determined. If any of the preferred clients is a participating client, then proceed to process block 607 to generate a combined video stream for the participating client that includes K preferred clients and the top M-K clients with the highest values of user interest. If not, proceed to process block 608 to generate a combined video stream for the participating client that includes the top M clients with the highest values of user interest. In process block 609, the combined video stream is sent to the participating client. In process block 610, whether there are any remaining participating clients that have not yet received a combined video stream is determined. If there are remaining participating clients, then return to process block 606. If not, proceed to process block 611 where the process ends.

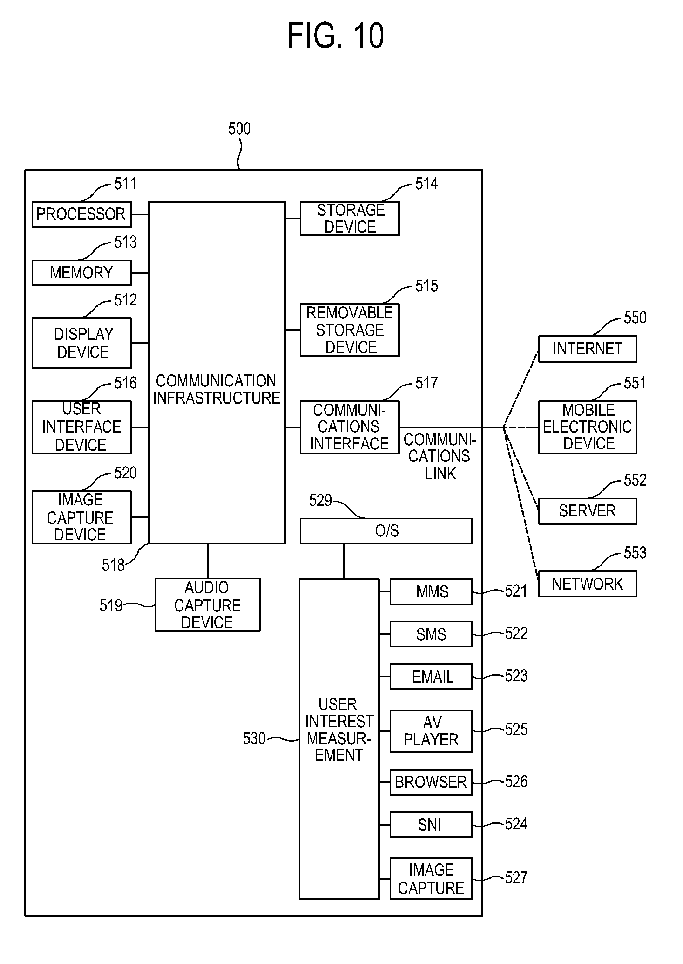

FIG. 10 is a high-level block diagram of an electronic apparatus comprising a computing system implementing an embodiment. The system 500 includes one or more processors 511 (e.g., ASIC, CPU, etc.), and can further include an electronic display device 512 (for displaying graphics, text, and other data), a main memory 513 (e.g., random access memory (RAM)), storage device 514 (e.g., hard disk drive), removable storage device 515 (e.g., removable storage drive, removable memory module, a magnetic tape drive, optical disk drive, computer-readable medium having stored therein computer software and/or data), user interface device 516 (e.g., keyboard, touch screen, keypad, pointing device), and a communication interface 517 (e.g., modem, wireless transceiver (such as WiFi, Cellular), a network interface (such as an Ethernet card), a communications port, or a PCMCIA slot and card). The communication interface 517 allows software and data to be transferred between the computer system and external devices and/or networks, such as the Internet 550, a mobile electronic device 551, a server 552, and a network 553. The system 500 further includes a communications infrastructure 518 (e.g., a communications bus, cross-over bar, or network) to which the aforementioned devices/modules 511 through 517 are connected.

The information transferred via communications interface 517 may be in the form of signals such as electronic, electromagnetic, optical, or other signals capable of being received by communications interface 517, via a communication link that carries signals and may be implemented using wire or cable, fiber optics, a phone line, a cellular phone link, an radio frequency (RF) link, and/or other communication channels.

The system 500 further includes an image capture device 520 such as a camera 131 and an audio capture device 519 such as a microphone 132. The system 500 may further include application modules as MMS module 521, SMS module 522, email module 523, social network interface (SNI) module 524, audio/video (AV) player 525, web browser 526, image capture module 527, etc.

The system 500 further includes a user interest module 530 for measuring user engagement of content as described herein, according to an embodiment. In one embodiment, the user interest module 530 along with an operating system 529 may be implemented as executable code residing in a memory of the system 500. In another embodiment, the user interest module 530 along with the operating system 529 may be implemented in firmware.

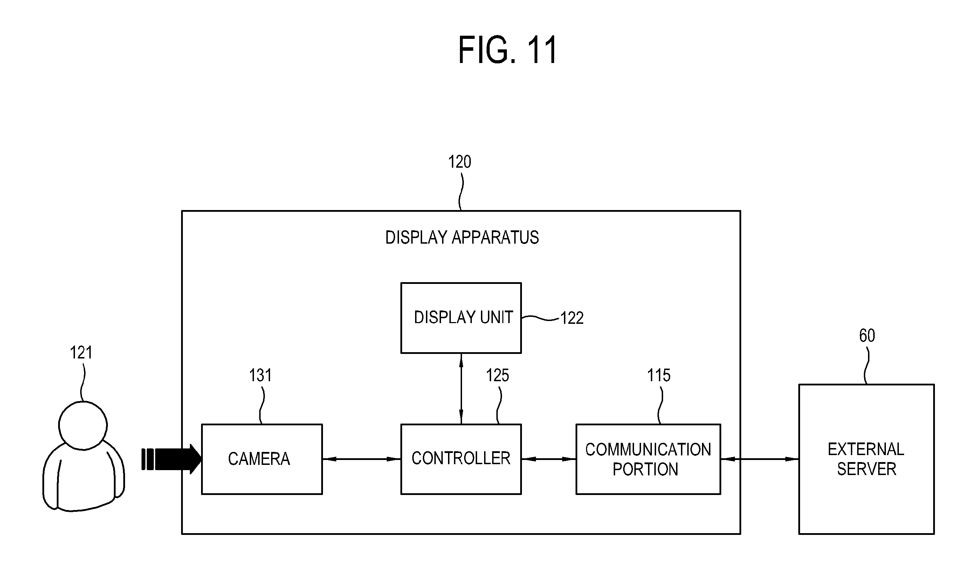

Hereinafter, FIGS. 11 to 16 illustrate an embodiment in FIGS. 1 to 10. The explanation made with reference to FIGS. 1 to 10 may also apply to FIGS. 11 to 16.

FIG. 11 is a block diagram of a display apparatus which provides a video chat function, in accordance with an embodiment. The configuration shown in FIG. 11 may be explained in connection with the configuration in FIG. 10. As shown in FIG. 11, a display apparatus 120 includes a display unit 122, a camera 131, a controller 125, and a communication portion 115, and may be connected to a user through the camera 131, and to an external server 60 through the communication portion 115.

The display unit 122 may display a played video thereon and the played video may be implemented as being displayed together with at least one another video. The display unit 122 may display a chat window engaging at least another user that displays a video. In another embodiment, the display unit 122 may selectively display a chat window according to a user's input. The camera 131 acquires a user's reaction information while a video is played by the display unit 122, and the user's reaction information includes at least one of a user's motion and voice captured by the camera 131. As shown in FIG. 10, the camera 131 may include an image capture device 520 and an audio capture device 519. The communication portion 115 may communicate with the external server 60 through a network device, and may include the communication interface 517 in FIG. 10. The controller 125 controls the communication portion 115 to transmit user's reaction information to the external server 60, and controls the communication portion 115 to receive at least one another user's reaction information with respect to a video from the external server 60. The controller 125 informs another user's reaction based on the received another user's reaction information. In another embodiment, the controller 125 may show a user's appearance based on the received another user's reaction information.

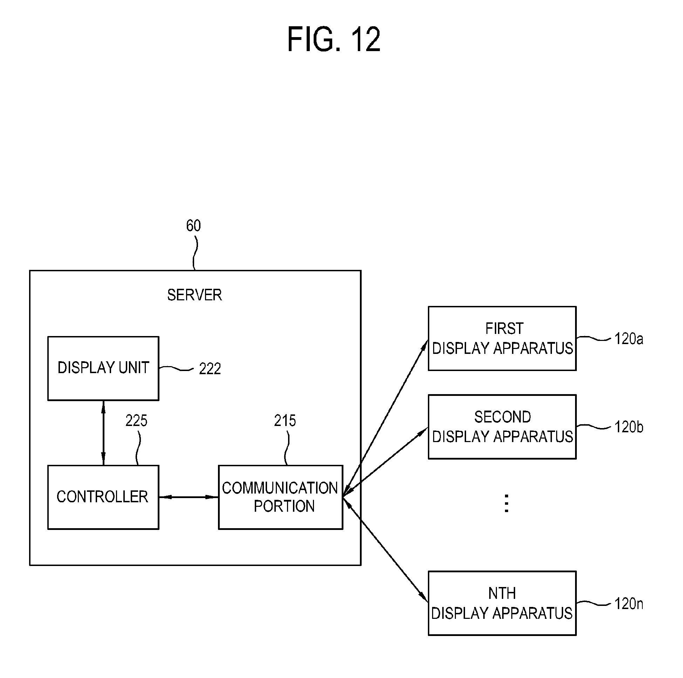

FIG. 12 is a block diagram of a server, in accordance with an embodiment. The configuration shown in FIG. 12 may be explained in connection with the configuration in FIGS. 8 and 10. As shown in FIG. 12, a server 60 may include a display unit 222, a controller 225 and a communication portion 215, and may be connected to at least one another display apparatus 120a, 120b, ... and 120n through the communication portion 215, and may be explained to have the same configuration as the server 552 in FIG. 10 does.

The controller 225 controls the communication portion 215 to receive a first user's reaction information with respect to a video that is displayed by a first display apparatus 120a, and determines the first user's degree of interest in the video based on the received first user's reaction information. Determining the first user's degree of interest may be performed by the user interest measurement application module 200 as shown in FIG. 8. The first user's reaction information may include information of at least one of the first user's motion and voice. The first user's degree of interest may be determined by using correlation between the first user's motion and voice. If the determined first user's degree of interest is a predetermined degree or higher, the controller 225 controls the communication portion 215 to transmit the first user's reaction information to a second display apparatus 120b of a second user that displays a video. In an embodiment in FIG. 8, the server 60 may select users' reaction information based on the first user's degree of interest through the video selection application module 265, and form a video stream to be transmitted to the second display apparatus 120b by using the users' reaction information.

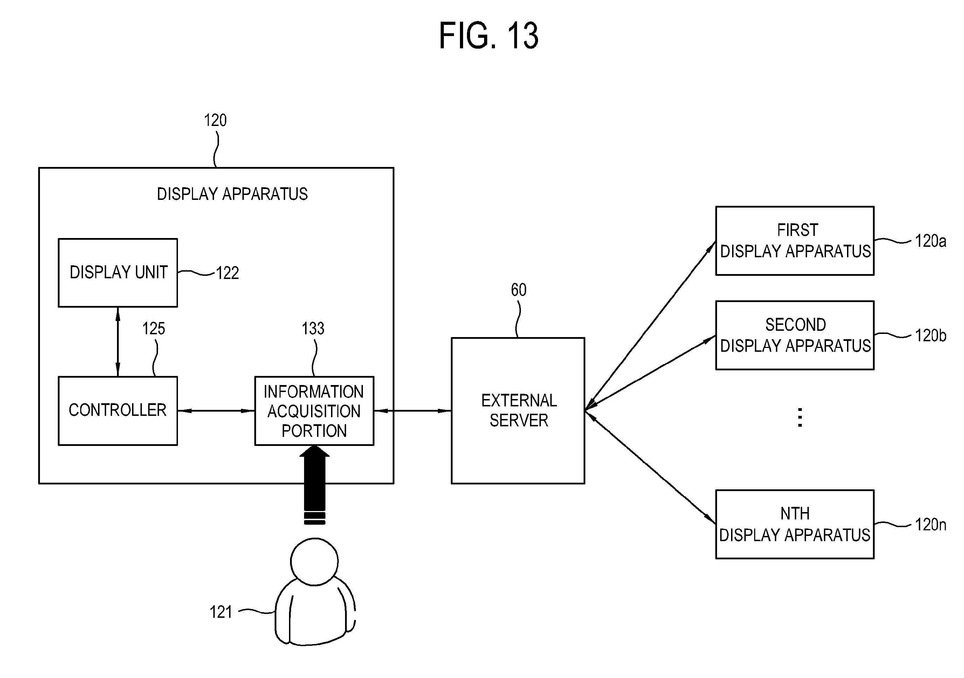

FIG. 13 is a block diagram of a display apparatus, in accordance with an embodiment. The configuration shown in FIG. 13 may be explained in connection with the configuration in FIGS. 2A, 10 and 11. As shown in FIG. 13, a display apparatus 120 includes a display unit 122, an information acquisition portion 133 and a controller 125. The display apparatus 120 may be connected to a user 121 through the information acquisition portion 133, and also to the external server 60.

The configuration in FIG. 13 is similar to the configuration in FIG. 11, but the camera 131 and the communication portion 115 in FIG. 11 is implemented as the information acquisition portion 133 as a single element in FIG. 13. The information acquisition portion 133 may be implemented to acquire a first user's first reaction information of the display apparatus 120 with respect to a first video, or a second user's second reaction information of at least one another display apparatus 120a, 120b,... and 120n that displays the first video. The first user's first reaction information may be acquired through a camera as a sub-element of the information acquisition portion 133, and the second user's second reaction information of the at least one another display apparatus may be acquired from the external server 60 through a communication portion as a sub-element of the information acquisition portion 133. The controller 125 may control the communication portion 115 to receive user's reaction information from at least one another display apparatus 120a, 120b,... and 120n that displays the first video. The controller 125 may determine the first user's or second user's degree of interest in the first video based on the first or second reaction information, and perform an operation based on the determined degree of interest. The operation may include transmission of the first user's first reaction information or the second user's second reaction information to the external server 60.

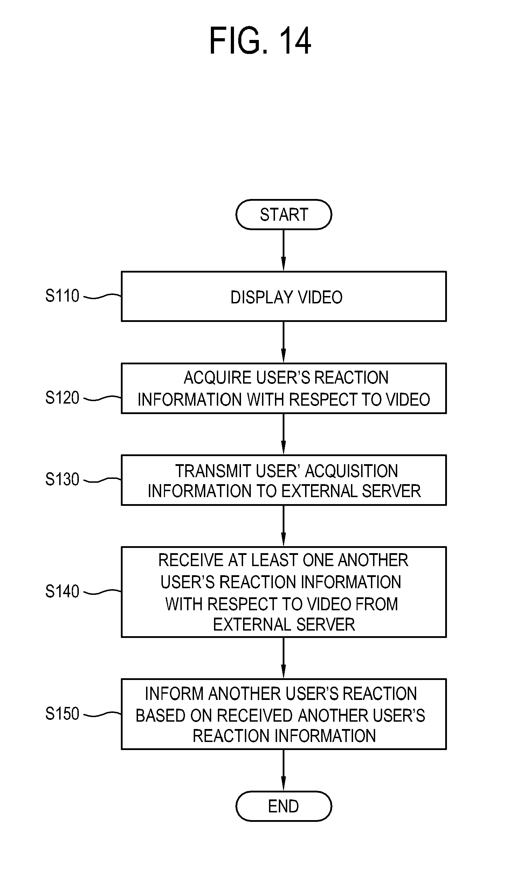

FIG. 14 is a flowchart of a display apparatus which provides a video chat function, in accordance with an embodiment. The configuration shown in FIG. 14 may be explained in connection with the configuration in FIGS. 1 and 2B. At operation S110, a video is displayed. At operation S120, the user's reaction information with respect to the video is acquired. At operation S130, the user's reaction information is transmitted to the external server. At operation S140, the display apparatus receives at least one another user's reaction information with respect to the video from the external server. At operation S150, the display apparatus informs another user's reaction based on the received another user's reaction information. The another user's reaction may be informed by at least one of showing another user's appearance or outputting another user's voice. In another embodiment, reference numeral 140 in FIG. 2B indicates a plurality of videos that includes a plurality of another users' motions and voices.

The another user's reaction is selected from a plurality of other user's reactions based on the user's reaction information.

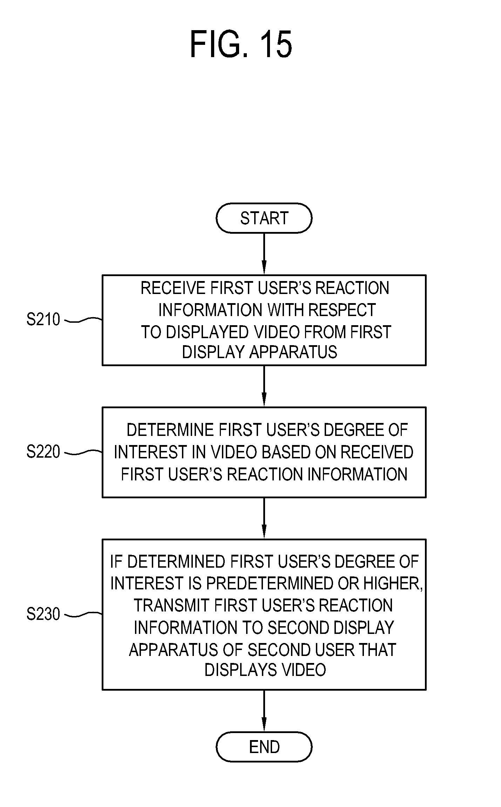

FIG. 15 is a flowchart of a server, in accordance with an embodiment. The configuration shown in FIG. 15 may be explained in connection with the configuration in FIGS. 1 and 9. At operation S210, the server receives the first user's reaction information with respect to the video displayed, from the display apparatus (S603 in FIG. 9). At operation S220, the server determines the first user's degree of interest in the video based on the received first user's reaction information (S604 in FIG. 9). At operation S230, if the determined first user's degree of interest is the predetermined degree or higher, the server transmits the first user's reaction information to the second display apparatus of the second user that displays the video (S610 in FIG. 9).

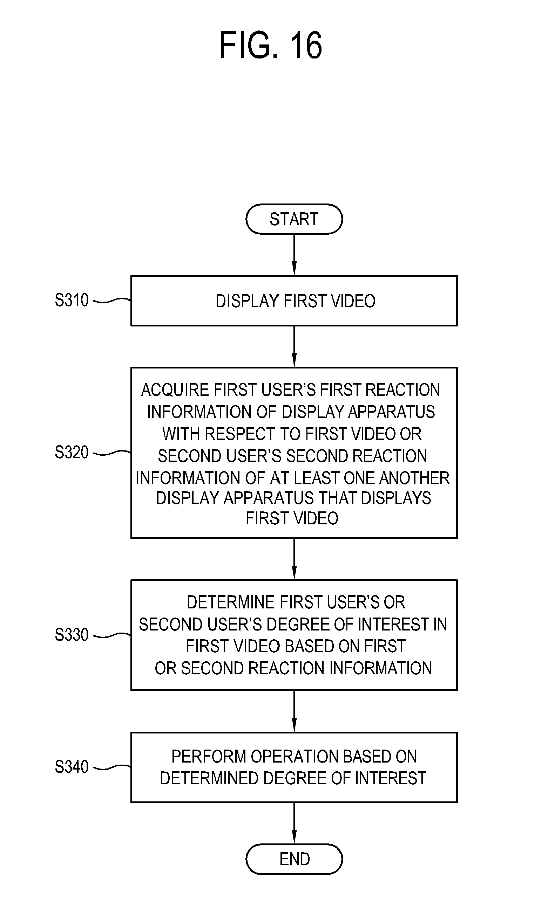

FIG. 16 is a flowchart of a display apparatus, in accordance with an embodiment. The configuration in FIG. 16 is related to another embodiment of the configuration in FIG. 14. In FIG. 14, the display apparatus transmits the user's reaction information with respect to the video to the external server, and receives another user's reaction information from the external server, and thus displays a newly combined video. In FIG. 16, the display apparatus acquires user's reaction information with respect to a video from a user or from another apparatus and determines the user's degree of interest.

In FIG. 16, at operation S310, the first video is displayed. At operation S320, the first user's first reaction information with respect to the first video or the second user's second reaction information of the at least one another display apparatus that displays the first video is acquired. At operation S330, the display apparatus determines the first user's or second user's degree of interest in the first video based on the first or second reaction information. At operation S340, the display apparatus performs the operation based on the determined degree of interest. The operation may include transmission of the first user's first reaction information or the second user's section reaction information to the external server.

As is known to those skilled in the art, the aforementioned example architectures described above, according to said architectures, can be implemented in many ways, such as program instructions for execution by a processor, as software modules, microcode, as computer program product on computer readable media, as analog/logic circuits, as application specific integrated circuits, as firmware, as consumer electronic devices, AV devices, wireless/wired transmitters, wireless/wired receivers, networks, multi-media devices, etc. Further, embodiments of said architecture can take the form of an entirely hardware embodiment, an entirely software embodiment or an embodiment containing both hardware and software elements.

Embodiments have been described with reference to flowchart illustrations and/or block diagrams of methods, apparatus (systems) and computer program products according to embodiments. Each block of such illustrations/diagrams, or combinations thereof, can be implemented by computer program instructions. The computer program instructions when provided to a processor produce a machine, such that the instructions, which execute via the processor create means for implementing the functions/operations specified in the flowchart and/or block diagram. Each block in the flowchart/block diagrams may represent a hardware and/or software module or logic, implementing embodiments. In alternative implementations, the functions noted in the blocks may occur out of the order noted in the figures, concurrently, etc.

The terms "computer program medium," "computer usable medium," "computer readable medium", and "computer program product," are used to generally refer to media such as main memory, secondary memory, removable storage drive, a hard disk installed in hard disk drive. These computer program products are means for providing software to the computer system. The computer readable medium allows the computer system to read data, instructions, messages or message packets, and other computer readable information from the computer readable medium. The computer readable medium, for example, may include non-volatile memory, such as a floppy disk, ROM, flash memory, disk drive memory, a CD-ROM, and other permanent storage. It is useful, for example, for transporting information, such as data and computer instructions, between computer systems. Computer program instructions may be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

Computer program instructions representing the block diagram and/or flowcharts herein may be loaded onto a computer, programmable data processing apparatus, or processing devices to cause a series of operations performed thereon to produce a computer implemented process. Computer programs (i.e., computer control logic) are stored in main memory and/or secondary memory. Computer programs may also be received via a communications interface. Such computer programs, when executed, enable the computer system to perform the features of one or more embodiments as discussed herein. In particular, the computer programs, when executed, enable the processor and/or multi-core processor to perform the features of the computer system. Such computer programs represent controllers of the computer system. A computer program product comprises a tangible storage medium readable by a computer system and storing instructions for execution by the computer system for performing a method of one or more embodiments.

As described above, a display apparatus, a server and a control method thereof in the embodiments may provide reaction information of people in real-time who are interested in a video while the video is displayed.

Although a few embodiments have been shown and described, it will be appreciated by those skilled in the art that changes may be made in these embodiments without departing from the principles of the invention, the range of which is defined in the appended claims and their equivalents.

**Claims**

1. A control method of a display apparatus (120, 500) comprising:

    displaying a video;
    acquiring a user's reaction information with respect to the video;
    transmitting the user's reaction information to an external server;
    receiving from the external server (60, 552) at least one another user's reaction information with respect to the video; and
    informing the another user's reaction based on the received another user's reaction information.

2. The control method of claim 1, wherein the acquiring the user's reaction information comprises acquiring information of at least one of the user's motion and voice.

3. The control method of claim 1, wherein the informing the another user's reaction comprises showing the another user's appearance based on the received another user's reaction information.

4. The control method of one of claims 1 to 3, wherein the displaying the video comprises displaying a chat window engaging the at least one another user.

5. The control method of claim 4, wherein the displaying the chat window engaging the another user comprises selectively displaying the chat window according to the user's input.

6. A control method of a server comprising:

receiving a first user's reaction information with respect to a video displayed, from a first display apparatus;
determining the first user's degree of interest in the video based on the received first user's reaction information; and
transmitting the first user's reaction information to a second display apparatus of a second user that displays the video if the determined first user's degree of interest is a predetermined degree or higher.

7. The control method of claim 6, wherein the receiving the first user's reaction information comprises receiving information of at least one of the first user's motion and voice.

8. The control method of claim 6, wherein the determining the first user's degree of interest comprises using correlation between the first user's motion and voice.

9. A display apparatus (120, 500) comprising:

a display unit (122, 512) which displays a video thereon;
a camera (131, 520) which captures a user's reaction information with respect to a video;
a communication portion (115, 517) which communicates with an external server (60, 552); and
a controller (125) which controls the communication portion to transmit the user's reaction information to the external server and controls the communication portion to receive at least one another user's reaction information with respect to the video from the external server, and informs the another user's reaction based on the received another user's reaction information.

10. The display apparatus (120, 500) of claim 9, wherein the user's reaction information comprises information of at least one of the user's motion and voice.

11. The display apparatus (120, 508) of claim 9, wherein the informing the another user's reaction comprises showing the another user's appearance based on the received another user's reaction information.

12. The display apparatus (120, 500) of one of claims 9 to 11, wherein the display unit (122, 512) displays a chat window (140) engaging at least one another user that displays the video.

13. The display apparatus (120, 500) of claim 12, wherein the display unit (122, 512) selectively displays the chat window (140) thereon according to the user's input.

14. A server (60, 552) comprising:

a communication portion (215) which communicates with at least one display apparatus; and
a controller (225) which controls the communication portion to receive a first user's reaction information with respect to a video displayed, from the first display apparatus, and determines a first user's degree of interest in the video based on the received first user's reaction information, and if the determined first user's degree of interest is a predetermined degree or higher, controls the communication portion to transmit the first user's reaction information to a second display apparatus of a second user that displays the video.

15. The server (60, 552) of claim 14, wherein the first user's reaction information comprises information of at least one of the user's motion and voice.

# FIG. 1

100

60

SERVER

50

INTERNET

COMBINED STREAM OF
3 VIDEO CHATS

110

LOCAL VIDEO
CAPTURE AT
CLIENT 1

120

CLIENT 1          CLIENT 2          CLIENT 3          CLIENT 4    · · ·    CLIENT N

# FIG. 2A

120

| | |
|---|---|
| 122 — DISPLAY | USER INTEREST MEASUREMENT — 200 |
| 131 — CAMERA | MEMORY — 135 |
| 132 — MICROPHONE | |
| 139 — VIDEO CHAT UI | REACTION CAPTURE — 260 |

# FIG. 2B

# FIG. 3

# FIG. 4

FIG. 5

# FIG. 6

EP 2 779 636 A2

# FIG. 7

EP 2 779 636 A2

280

REACTION
CAPTURE FILE
STARTS

THE VALUE OF USER
INTEREST METRIC EXCEEDS
A THRESHOLD

USER
BECOMES
ACTIVE

REACTION
CAPTURE
ENDS

THE VALUE OF USER
INTEREST METRIC DROPS
BELOW A THRESHOLD

USER
BECOMES
INACTIVE

ON-GOING VIDEO
RECORDING

- - - - - - - - - - - ->

$T_3 - T_b$     $T_1$     $T_3$          $T_2$     $T_4$     $T_4 + T_c$

t

- - - - - - - - - - ->

ON-GOING USER INTEREST
METRIC CALCULATION

# FIG. 8

60

265

VIDEO SELECTION

200

USER INTEREST MEASUREMENT

# FIG. 9

```
                                        600
            601 ──⌒──  ( START )        ╲

            602 ──⌐  RECEIVE N CLIENTS' LIST OF
                      PREFERRED CLIENTS

            603 ──⌐  RECEIVE N CLIENTS'
                      VIDEO STREAMINGS

            604 ──⌐  CALCULATE OR RECEIVE N CLIENTS'
                      USER INTEREST METRICS

            605 ──⌐  SELECT M CLIENTS WITH
                      HIGHEST VALUES
```

606 — CLIENT I'S PREFERRED USER(S) EXISTS?

NO      YES

608 — GENERATE A COMBINED VIDEO OF TOP M CLIENTS

607 — GENERATE A COMBINED VIDEO OF K PREFERRED CLIENTS AND TOP M-K CLIENTS

609 — SEND THE COMBINED VIDEO TO CLIEDNT I

610 — DONE WITH N CLIENTS?

NO

YES

611 — ( END )

# FIG. 10

500

| | | |
|---|---|---|
| PROCESSOR 511 | | STORAGE DEVICE 514 |
| MEMORY 513 | COMMUNICATION INFRASTRUCTURE | REMOVABLE STORAGE DEVICE 515 |
| DISPLAY DEVICE 512 | | COMMUNI-CATIONS INTERFACE 517 |
| USER INTERFACE DEVICE 516 | | |
| IMAGE CAPTURE DEVICE 520 | | |

518

519 — AUDIO CAPTURE DEVICE

COMMUNI-CATIONS LINK

INTERNET 550

MOBILE ELECTRONIC DEVICE 551

SERVER 552

NETWORK 553

529 — O/S

530 — USER INTEREST MEASUR-EMENT

MMS ~521
SMS ~522
EMAIL ~523
AV PLAYER ~525
BROWSER ~526
SNI ~524
IMAGE CAPTURE ~527

**FIG. 11**

# FIG. 12

# FIG. 13

DISPLAY APPARATUS 120

DISPLAY UNIT 122

CONTROLLER 125

INFORMATION ACQUISITION PORTION 133

121

EXTERNAL SERVER 60

FIRST DISPLAY APPARATUS 120a

SECOND DISPLAY APPARATUS 120b

NTH DISPLAY APPARATUS 120n

# FIG. 14

START

S110 — DISPLAY VIDEO

S120 — ACQUIRE USER'S REACTION INFORMATION WITH RESPECT TO VIDEO

S130 — TRANSMIT USER' ACQUISITION INFORMATION TO EXTERNAL SERVER

S140 — RECEIVE AT LEAST ONE ANOTHER USER'S REACTION INFORMATION WITH RESPECT TO VIDEO FROM EXTERNAL SERVER

S150 — INFORM ANOTHER USER'S REACTION BASED ON RECEIVED ANOTHER USER'S REACTION INFORMATION

END

# FIG. 15

```
                    ┌─────────┐
                    │  START  │
                    └────┬────┘
                         │
                         ▼
        ┌────────────────────────────────────┐
        │   RECEIVE FIRST USER'S REACTION     │
        │     INFORMATION WITH RESPECT        │
S210 ───│   TO DISPLAYED VIDEO FROM FIRST     │
        │         DISPLAY APPARATUS           │
        └──────────────────┬─────────────────┘
                           │
                           ▼
        ┌────────────────────────────────────┐
        │   DETERMINE FIRST USER'S DEGREE OF  │
S220 ───│  INTEREST IN VIDEO BASED ON RECEIVED│
        │    FIRST USER'S REACTION INFORMATION│
        └──────────────────┬─────────────────┘
                           │
                           ▼
        ┌────────────────────────────────────┐
        │  IF DETERMINED FIRST USER'S DEGREE OF│
        │ INTEREST IS PREDETERMINED OR HIGHER, │
        │   TRANSMIT FIRST USER'S REACTION     │
S230 ───│   INFORMATION TO SECOND DISPLAY      │
        │  APPARATUS OF SECOND USER THAT       │
        │         DISPLAYS VIDEO              │
        └──────────────────┬─────────────────┘
                           │
                           ▼
                    ┌─────────┐
                    │   END   │
                    └─────────┘
```

# FIG. 16

START

S310 — DISPLAY FIRST VIDEO

S320 — ACQUIRE FIRST USER'S FIRST REACTION INFORMATION OF DISPLAY APPARATUS WITH RESPECT TO FIRST VIDEO OR SECOND USER'S SECOND REACTION INFORMATION OF AT LEAST ONE ANOTHER DISPLAY APPARATUS THAT DISPLAYS FIRST VIDEO

S330 — DETERMINE FIRST USER'S OR SECOND USER'S DEGREE OF INTEREST IN FIRST VIDEO BASED ON FIRST OR SECOND REACTION INFORMATION

S340 — PERFORM OPERATION BASED ON DETERMINED DEGREE OF INTEREST

END